Europäisches Patentamt

(19) European Patent Office

Office européen des brevets

(11) Publication number : **0 642 821 A1**

(12) **EUROPEAN PATENT APPLICATION**

(21) Application number : 94306669.6

(22) Date of filing : 12.09.94

(51) Int. Cl.⁶ : **B01D 53/34, B01J 19/12**

(30) Priority : **10.09.93 GB 9318830**

(43) Date of publication of application :
**15.03.95 Bulletin 95/11**

(84) Designated Contracting States :
**AT BE DE GB NL**

(71) Applicant : **COLT INTERNATIONAL HOLDINGS A.G.**
**Ruessenstrasse 5A**
**CH-6340 Walterswil/Baar (CH)**
(84) **BE DE NL AT**

(71) Applicant : **COLT INTERNATIONAL LICENSING LIMITED**
**New Lane,**
**Havant**
**Hampshire PO9 2LY (GB)**
(84) **GB**

(72) Inventor : **Nott, Graham**
**52 Lovatt Street**
**Stafford ST6 3DB (GB)**

(74) Representative : **Greenwood, John David et al**
**Graham Watt & Co.**
**Riverhead**
**Sevenoaks Kent TN13 2BN (GB)**

(54) **Method and apparatus for removing odours from a gas stream.**

(57)    Apparatus for deodorising a gas stream includes a reservoir (2) for a 3 to 8% by weight aqueous hydrogen peroxide solution, and a supply pipe (26) for supplying the solution to the first of a series of scrubbing towers (14). The solution passes through each tower (14) before being returned to the reservoir (2) counter-current to the gas stream flowing upwards through the towers (14). Ultra-violet lamps (40) irradiate the solution prior to entering each tower and the reservoir (2) to create reactive species in the solution to oxidise odorous chemicals in the gas stream absorbed in the solution. This method provides the removal of odours caused by a wide range of organic and non-organic chemicals.

Fig 1

EP 0 642 821 A1

This invention relates to the removal of odours from a gas stream.

It is known to remove pollutant chemicals from exhaust gases produced by manufacturing processes to prevent harmful pollution of the environment to which the gases are released.

There is now an increasing requirement to remove obnoxious odours from such gases to reduce the impact on people exposed to the gases even if the products are not in themselves harmful. Such odours are often produced by manufacturing processes, e.g. food production, where the chemical nature of the odour is not easily identifiable and may involve a number of organic species.

Existing, well-established volatile organic compound and odour abatement techniques have various drawbacks in their application to odour removal.

If the odorous exhaust products are combustible they can be incinerated but this is generally an expensive option especially if the contaminants are only present in small amounts in a gas stream.

Adsorption techniques, for example using an activated carbon bed through which the gases are passed, are also expensive and have a high maintenance cost associated with replenishment of the adsorptive material. They are not appropriate for use with moist or humid gases.

Chemical scrubbing, for example using an aqueous solution of sodium hypochlorite, can be effective, particularly with smells associated with meat processing, but has associated with it problems of chlorine fumes and eventual disposal of the scrubbing chemical as well as the need for multiple columns.

According to a first aspect of the present invention, a method of removing odours from a gas stream comprises forming a reactive medium by irradiating an aqueous solution of hydrogen peroxide with ultra-violet radiation and passing it into a mixing chamber and contacting the gas stream with the reactive medium in the mixing chamber.

According to a second aspect of the present invention, an apparatus for removing odours from a gas stream comprises: supply means for supplying an aqueous solution of hydrogen peroxide to a mixing chamber by way of a source of ultra-violet radiation by which the solution can be irradiated to form a reactive medium; gas stream supply means for supplying the gas stream to the mixing chamber so it can contact the reactive medium; and extraction means for extracting the reactive medium from the mixing chamber.

The ultra-violet irradiation creates reactive species within the hydrogen peroxide solution. As the gas stream mixes with the reactive medium, or solution, there will be some absorption of the odorous chemicals into the medium whereupon they can react with the reactive species. Once the unwanted chemicals react with reactive medium they are broken down to less or non-odorous components.

Not all odorous chemicals are removable by this method of the present invention but it has been found effective at removing a number of odorous, food processing related, organic compounds. Conversely, non-odorous components may also be removed perhaps supplementing other more specific chemical removing stages.

The activation of the aqueous solution of hydrogen peroxide is more efficiently obtained at a radiation wavelength of 205μm. Accordingly, a medium pressure mercury lamp is preferably used in the method of the present invention, but a low pressure mercury lamp could be used, for example.

The degree of dilution of the hydrogen peroxide is not critical but a good balance between the quantity of hydrogen peroxide used in the method and efficiency of irradiation and odour removal has been found to be in the region of 3-8%, for example 4%, of the solution's weight.

It is preferable that the source of ultra-violet radiation is located close to the mixing region to maximise the reactivity of the solution when it meets the gas stream. The solution can be passed within a generally cylindrical housing with the ultra-violet radiation directed towards a central, ultra-violet transparent pipe or one can generally irradiate the solution as it is dispersed in the mixing region.

To maximise the absorption efficiency it is preferable to use a counter-current method of operation and, in particular, to employ in the apparatus a high liquid loading and a mass-transfer packing in the mixing chamber, although other methods and apparatus can be used to provide the necessary gas stream-reactive medium contact.

A modular apparatus can be used having two or more mixing chambers in series with the solution leaving one chamber being further irradiated before entering the next mixing chamber in series. Preferably, the gas stream flows through the mixing chambers in such a way as to provide a counter-flow of the solution and gas stream throughout the modular apparatus as a whole.

The odorous chemicals will generally have a reaction time with the reactive species of the irradiated hydrogen peroxide solution which is longer than the time it takes for the solution to reach a reservoir for the apparatus. Usually, then, the reservoir acts as a reaction chamber and, preferably, the solution is further irradiated by ultra-violet radiation as it enters the reservoir to increase the reaction rate within the reservoir.

Further, the dwell time in the reservoir of the solution between entering and leaving the reservoir should, the applicant has recognised, ideally be kept long. To this end it is preferable that the reservoir includes baffles, i.e. flow control surfaces, which prevent straight-line flow between a return means returning the solution to the reservoir and a supply means, supplying the solution to a mixing chamber.

The apparatus of the present invention may be used in series with other gas stream processing apparatus which use other methods of treating the gas stream, either by way of pre- or post-treatment to that effected by the present invention.

Embodiments of the invention and their methods of operation will now be described, by way of example only, with reference to the accompanying drawing, of which:

Figure 1 is a diagrammatic side sectional view of a first embodiment of the present invention; and

Figure 2 is a diagrammatic side sectional view of a second embodiment of the present invention.

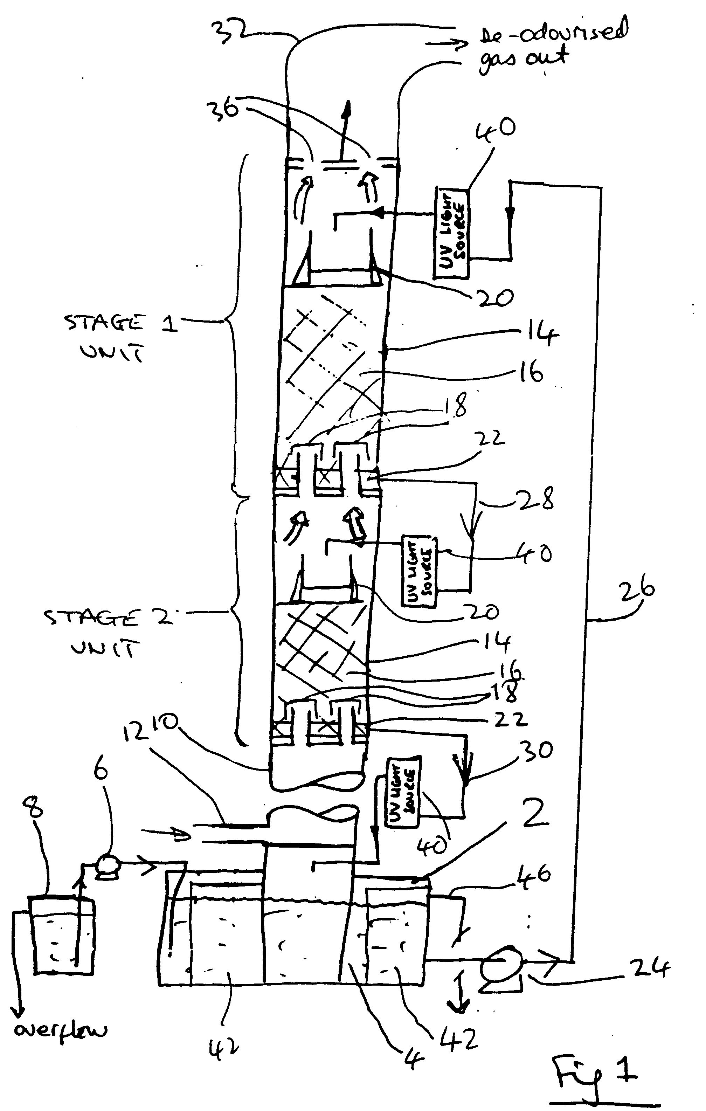

The modular apparatus of Figure 1 has at its base an annular reservoir 2 holding a quantity of an aqueous solution of hydrogen peroxide 4 (in this instance 4% by weight) filled by means of a pump 6 from a solution supply container 8.

Rising from the base of the reservoir is a cylindrical duct 10 into which a gas stream containing odorous components to be removed is introduced via a pipe 12. The duct 10 supports a two-stage scrubbing column composed of two units, designated as stage 1 and stage 2 units. The stage units are identical so the same components of each unit will be referenced by the same numerals in the following description.

Each unit comprises a tubular, stainless steel scrubbing vessel 14 of conventional design partially filled by a high-efficiency, mass-transfer packing 16 of 1 1/2" stainless steel pall rings to form a mixing chamber. Other suitable forms of packing may be used, for example plastics rings or packing material having a coating, or made of, a suitable catalyst.

The packing 16 surrounds, at the bottom of each unit, gas risers 18 which allow the introduction of the gas stream to the base of the units either from the duct 10 or a lower unit (e.g. from the stage 2 unit into the stage 1 unit). The gas risers 18 also allow a liquid level 22 to build up at the base of each stage which is sufficient to drive the solution, or liquor, down to the next stage via a further ultra-violet source 40 and return pipe 28.

On top of the packing of each unit is a fluid distributor 20, in this embodiment a perforated tray, for spreading solution supplied to the unit over the top surface of the packing 16 from where it percolates the layer of solution 22.

The solution is supplied to the upper unit, stage 1, by a pump 24 via a supply pipe 26 and exits this unit via a return pipe 28 under gravity.

The return pipe 28 of the stage 1 unit constitutes an overflow pipe for the stage 1 unit and a supply pipe for the lower unit, stage 2.

A return pipe 30 at the bottom of the lower unit 14, stage 2, functions as the return pipe 28 of the upper unit 14 but in this case returns the solution to the reservoir 2.

The gas stream introduced into the duct 10 passes through the two units of stages 1 and 2 and finally into a gas removal duct 32 via apertures 36 at the top of the upper of the two units 14, the gas risers 18 introducing the gas stream into the packings 16 in a counter-current mode of operation with respect to the solution flow.

The solution supply lines 26, 28 and 30, to the two units 14 and the reservoir 2, include sources of ultraviolet radiation 40 located close to the respective mixing chambers 14 or reservoir 2. The ultra-violet sources may be ultra-violet water disinfection units, for example as supplied by Hanovia Limited, 145 Farnham Road, Slough, England SL1 4BX. The ultra-violet sources ideally have a high output at about 205 μm, the optimum wavelength for activating the hydrogen peroxide solution.

The irradiation of the aqueous hydrogen peroxide produces at least the following reaction:

$$H_2O_2 + UV \rightarrow 2 \cdot OH$$

It is the ·OH radicals which are believed to be the principal reactive species which oxidise the odorous components that diffuse into the solution in the mixing chambers in the present invention.

Without the ultra-violet light, oxidation reactions would be much slower because the reactive species would be $OH^-$ and $HO_2^-$ ions. In arrangements in which the ultraviolet light irradiates the solution within the mixing chambers, the light can also act directly on the chemicals in the gas stream to break the molecules down.

The odorous components are generally slowly reactive with the reactive species in the solution so a long dwell time in the reservoir 2 is advantageous. This is achieved by baffles 42 which constrain the solution to flow in a convoluted path within the annular reservoir 2 between the input pipe 30 to the reservoir 2 and the exit pipe 26 from the reservoir 2.

An overflow pipe 46 provides a maximum level of the solution within the reservoir.

A major advantage of the advanced oxidation of the scrubbing technique of the present invention is that the decomposition products of hydrogen peroxide are water and oxygen, both of which are environmentally acceptable. The oxidation products would generally be present in trace amounts.

Alkali chemicals added to the aqueous solution of hydrogen peroxide may improve the oxidation conditions of the solution.

The desired strength of aqueous solution of hydrogen peroxide can be economically obtained by diluting commercially available 35% by weight hydrogen peroxide aqueous solution. Other methods can be employed if desired, for example by adding sodium peroxide to water. The water may be de-ionised water to minimise the effects of alkalinity.

A suitable catalyst, for example $TiO_2$ or $FeSO_4$, may be utilised in the solution, in the packings, or in the reservoir to speed up the degradation of the odorous components.

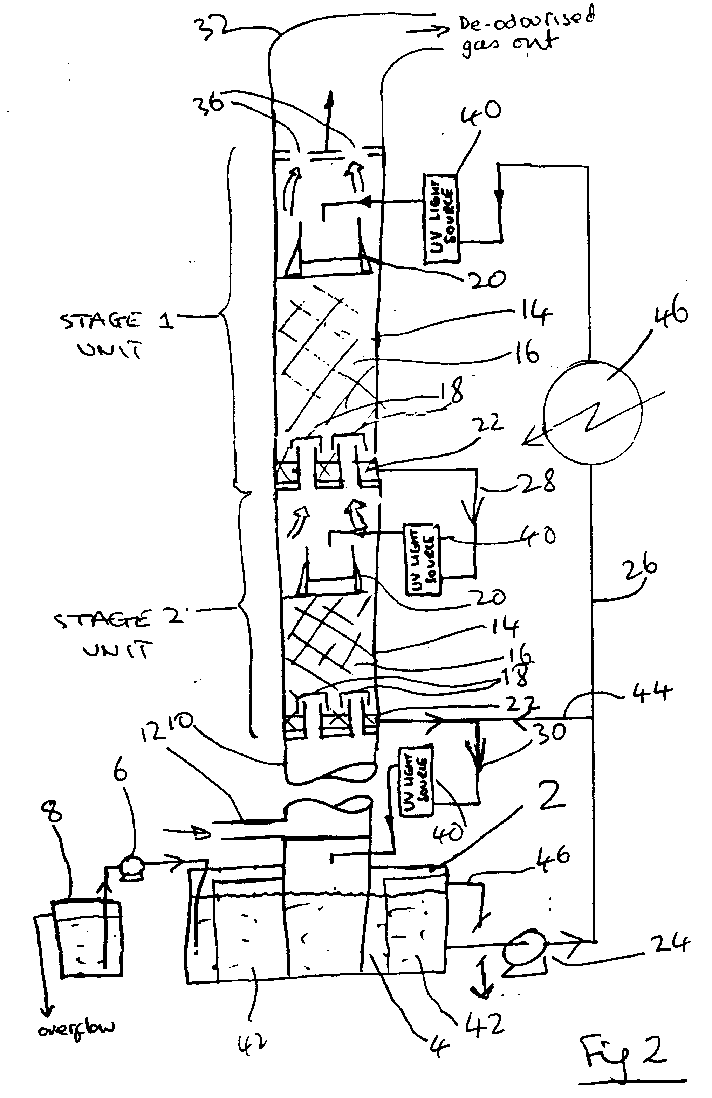

Referring now to Figure 2, a second embodiment of the present invention is a modified form of the apparatus of Figure 1 in which the same components have like reference numerals. The apparatus of Figure 2 includes two modifications to the recirculation flow path of the solution pumped from the reservoir 2 by pump 24 and through the pipe 26.

Part of the recirculation flow is diverted via a pipe 44 to join the flow of the reactive medium in the return pipe 30 from the bottom of the lower of the units 14 prior to irradiation by the associated UV light source 40. This provides a high temperature reactive medium recirculation flow back to the reservoir 2 via the lowest positioned UV light source 40. The high temperatures obtained by this recirculation flow provides an increased rate of destruction of the odorous compounds in the reservoir 2. Other methods of providing the high temperature recirculation can be readily devised. For example, a pipe could instead pass the reactive medium from the reservoir 2 to a further ultra-violet light source for irradiation to form a flow path separate from that provided by pipe 30.

The recirculation flow in pipe 26 beyond the take-off by pipe 30 passes through a cooler 46 which cools the reactive medium from the reservoir 2 prior to its passage through the uppermost of the UV light sources 40 and into the upper one of the mixing chambers 14. Cooling the reactive medium in this manner increases the absorption of the odorous compounds into the reactive medium in the mixing chamber 40.

Any suitable cooler may be employed, for example a refrigeration unit or heat exchanger.

The high temperature and low temperature recirculation flow paths may be present individually in an apparatus according to the present invention, or together, as in the apparatus of Figure 2.

## Claims

1. A method of removing odours from a gas stream comprising:

    forming a reactive medium by irradiating an aqueous solution of hydrogen peroxide with ultra-violet radiation and passing it into a mixing chamber (14); and

    contacting the gas stream with the reactive medium in the mixing chamber (14).

2. A method as claimed in claim 1 in which the gas stream is passed through the mixing chamber (14) in a counter current operation relative to the gas stream.

3. A method as claimed in claim 2 in which the reactive medium is irradiated again with ultra-violet radiation after removal from the mixing chamber (14).

4. A method as claimed in any preceding claim in which the reactive medium is cooled before being passed into the mixing chamber (14).

5. A method as claimed in any preceding claim in which the reactive medium is collected in a reservoir (2) after exiting the mixing chamber (14) and is recirculated to the mixing chamber (14).

6. A method as claimed in claim 5 in which the reactive medium is extracted from the reservoir (2), irradiated by ultra-violet radiation, and passed to the reservoir (2) without passing through a mixing chamber (14).

7. An apparatus for removing odours from a gas stream comprising:

    supply means (26, 28) for supplying an aqueous solution of hydrogen peroxide to a mixing chamber (14) by way of a source of ultra-violet radiation (40) by which the solution can be irradiated to form a reactive medium;

    gas stream supply means (10) for supplying the gas stream to the mixing chamber (14) so it can contact the reactive medium; and

    extraction means (28) for extracting the reactive medium from the mixing chamber (14).

8. An apparatus as claimed in claim 7 in which the source of ultra-violet light (40) is located close to or in the mixing chamber (14).

9. An apparatus as claimed in either one of claims 7 and 8 in which the mixing chamber (14) comprises a spray chamber arranged to spray the reactive medium into the gas stream.

10. An apparatus as claimed in any one of claims 7 to 9 in which the mixing chamber (14) comprises:

    a counterflow reaction tower (14) including a high efficiency, mass transfer packing (16),

    means (20) for distributing the reactive medium across the top of the packing (16); and

    means (18) for introducing the gas stream into the packing (16).

11. A modular apparatus including two or more apparatus (14) each as claimed in any one of claims 7 to 10 in which the gas stream and the reactive medium pass through the mixing chambers (14) of each apparatus.

12. An apparatus as claimed in any one of claims 7 to 11 including a reservoir (2) for the reactive medium, supply means (28) for supplying the reactive medium to the or a mixing chamber (14), return means (30) for returning the solution to the reservoir (2) from the or a mixing chamber (14), and a source of ultra-violet radiation (40) by which the reactive medium can be further irradiated prior to entering the reservoir (2).

13. An apparatus as claimed in claim 12 in which the reservoir (2) includes baffles (42) for preventing straight-line flow between the return means (30) for returning the reactive medium to the reservoir (2) and a supply means (26) supplying solution to a mixing chamber (14) from the reservoir (2).

14. An apparatus as claimed in any one of claims 7 to 13 including cooling means (46) for cooling the reactive medium passing to a mixing chamber (14) via the supply means (26).

15. An apparatus as claimed in any one of claims 12 and claims 13 and 14 as dependent on claim 12 which is arranged to pass a portion of the reactive medium in the supply means (26) to a source of ultra-violet radiation (40) by which the reactive medium can be further irradiated prior to being passed to the reservoir (2).

Fig 1

Fig 2

**European Patent Office**

## EUROPEAN SEARCH REPORT

Application Number

EP 94 30 6669

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | US-A-5 256 379 (DELOACH) 26 October 1993<br><br>* the whole document *<br>--- | 1,2,5,<br>7-9,11,<br>12 | B01D53/34<br>B01J19/12 |
| A | EP-A-0 242 941 (THE ELECTRICITY COUNCIL)<br><br>* page 2, line 38 - page 3, line 51;<br>figure 1 *<br>--- | 1-3,<br>5-10,12,<br>15 | |
| A | DE-A-38 08 182 (MITSUBISHI DENKI KK)<br><br>* column 10, line 67 - column 13, line 25;<br>figure 3 *<br>--- | 1-3,<br>6-10,12,<br>13,15 | |
| A | EP-A-0 360 941 (ULTROX INT.)<br><br>* claims 1-17; figures 1-6 *<br>--- | 1-3,6-8,<br>10,12,<br>13,15 | |
| A | WO-A-91 10499 (KRC UMWELTTECHNIK GMBH)<br>* claims 1,2 *<br>--- | 1,7-9 | TECHNICAL FIELDS SEARCHED (Int.Cl.6)<br><br>B01D<br>B01J<br>A62D |
| A | BE-A-903 443 (BELGONUCLEAIRE NV)<br>* the whole document *<br>--- | 1 | |
| A | US-A-4 108 746 (THE US OF AMERICA)<br>* claims 1-14 *<br>--- | 1 | |
| A | DATABASE WPI<br>Section Ch, Week 9132,<br>Derwent Publications Ltd., London, GB;<br>Class E16, AN 91-233659<br>& JP-A-3 151 023 (AGENCY OF IND SCI TECH)<br>27 June 1991<br>* abstract *<br>--- | 1 | |

-/--

The present search report has been drawn up for all claims

| Place of search | Date of completion of the search | Examiner |
|---|---|---|
| THE HAGUE | 1 December 1994 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 642 821 A1

<table>
<tr><td colspan="2"></td><td>European Patent<br>Office</td><td>EUROPEAN SEARCH REPORT</td><td>Application Number<br>EP 94 30 6669</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DATABASE WPI<br>Section Ch, Week 9017,<br>Derwent Publications Ltd., London, GB;<br>Class D15, AN 90-127044<br>& JP-A-2 071 890 (HITACHI PLANT ENG CONST)<br>12 March 1990<br>* abstract * | 1 | |
| A | PATENT ABSTRACTS OF JAPAN<br>vol. 007, no. 056 (C-155) 8 March 1983<br>& JP-A-57 207 529 (HITACHI NETSUKIGU KK)<br>20 December 1982<br>* abstract * | 1,7 | |
| | | | TECHNICAL FIELDS<br>SEARCHED (Int.Cl.6) |

The present search report has been drawn up for all claims

| Place of search | Date of completion of the search | Examiner |
|---|---|---|
| THE HAGUE | 1 December 1994 | Eijkenboom, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

9